# EUROPEAN PATENT SPECIFICATION

(11) **EP 3 318 817 B1**
(45) Date of publication and mention of the grant of the patent: **05.02.2020**
(21) Application number: 15897188.7
(22) Date of filing: 02.07.2015
(51) Int. Cl.: F24S 10/70, F24S 40/00, F16L 53/00

(54) **HEATER**
HEIZER
DISPOSITIF DE CHAUFFAGE

(43) Date of publication of application: 09.05.2018
(73) Proprietor: Chiyoda Corporation, Kanagawa 220-8765 (JP)
(72) Inventor: KANEMITSU, Masaya, Yokohama-shi Kanagawa 220-8765 (JP); SHIRAI, Jotaro, Yokohama-shi Kanagawa 220-8765 (JP); KAIDA, Ryuichi, Yokohama-shi Kanagawa 220-8765 (JP); SUZUKI, Yasushi, Yokohama-shi Kanagawa 220-8765 (JP); NISHIJIMA, Yasuyuki, Yokohama-shi Kanagawa 220-8765 (JP)
(74) Representative: Schröer, Gernot H.
(86) International application number: PCT/JP2015/069149
(87) International publication number: WO 2017/002261

(56) References cited:
- WO-A1-2010/079318
- CN-U- 203 731 722
- JP-A- H05 317 843
- JP-A- 2014 159 892
- JP-A- 2014 523 997
- JP-A- 2014 531 552
- US-A1- 2010 175 689
- US-A1- 2014 238 523

## Description

The present invention relates to a solar heat power generation system comprising at least one heating device for heating a heat flow path of the solar heat power generation system.

Solar heat power generation systems that condense sunlight into a heat flow path using a reflecting mirror to heat the heat transfer fluid flowing in the heat flow path, generate steam using the heated heat transfer fluid, and rotate a steam turbine to generate power are known. The solar heat power generation systems can be introduced at a lower cost than photovoltaic power generation systems and can generate power for twenty-four hours by heat storage. Conventionally, a solar heat power generation system using oil as a heat transfer fluid has been proposed (see, for example, Patent Document 1).

In recent years, molten salt has attracted attention as the heat transfer fluid used for solar heat power generation system. Since the molten salt has a high boiling point, the operation temperature can be made relatively high according to the molten salt and high temperature steam is generated to improve the power generation efficiency.

Since the molten salt solidifies at about 250°C, the heat flow path draws heat from the molten salt and the molten salt may solidify if the temperature of the heat flow path is relatively low when the molten salt is poured into the heat flow path after start-up or maintenance. For this reason,
it is necessary to warm the heat flow path to a predetermined temperature or more before pouring the molten salt into the heat flow path.

As one of techniques to warm the heat flow path, it is conceivable to cause a current to flow in the heat flow path. When the current flows, the heat flow path is warmed with Joule heat at that time.

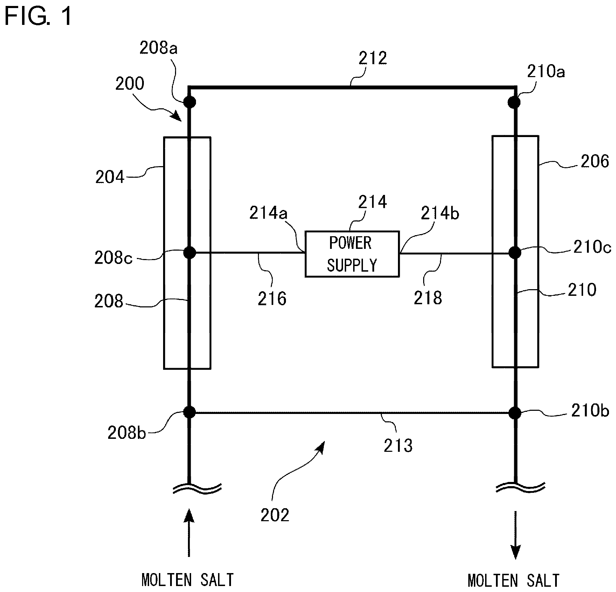

Fig. 1 is a diagram for describing an example of a heating device for heating a heat flow path. A heat flow path 200 illustrated in Fig. 1 is a part of a heat flow path used in a light condensing area of a solar heat power generation system. Molten salt flows in the heat flow path 200. The heat flow path 200 includes a first heat collection elements 208 that receives sunlight concentrated by a first reflector 204, a second heat collection elements 210 that receives sunlight concentrated by a second reflector 206, and a connection pipe 212 that connects one end portion 208a of the first heat collection elements 208 and one end portion 210a of the second heat collection elements 210.

The heating device 202 includes a connecting wire 213 that electrically connects the other end portion 208b of the first heat collection elements 208 and the other end portion 210b of the second heat collection elements 210, a power supply 214 for causing a current to flow in the heat flow path 200, a first power supply wire 216 that connects one pole 214a of the power supply 214 and a center point 208c of the first heat collection elements 208, and a second power supply wire 218 that connects the other pole 214b of the power supply 214 and a center point 210c of the second heat collection elements 210.

In the configuration illustrated in Fig. 1, the first power supply wire 216, a portion from the center point 208c to the one end portion 208a of the first heat collection elements 208, the connection pipe 212, and a portion from the one end portion 210a to the center point 210c of the second heat collection elements 210, and the second power supply wire 218 form a first current path in which a current from the power supply 214 flows. Further, the first power supply wire 216, a portion from the center point 208c to the other end portion 208b of the first heat collection elements 208, the connecting wire 213, a portion from the other end portion 210b to the center point 210c of the second heat collection elements 210, and the second power supply wire 218 form a second current path in which a current from the power supply 214 flows. When a current flows from the power supply 214 to the first current path and the second current path, the first heat collection elements 208, the second heat collection elements 210, and the connection pipe 212 can be heated by Joule heat.

[patent document 1] JP 2014-102013 A

In such a configuration illustrated in Fig. 1, a resistance value of the connection pipe 212 is usually higher than a resistance value of the connecting wire 213. As a reason for this, while the connecting wire 213 is usually formed of a material (for example, copper) having a very low resistance value, the connection pipe 212 needs to be formed of a material (for example, stainless steel) that can withstand high-temperature molten salt and a material having a low resistance value similar to the connecting wire 213 cannot be selected. Therefore, even when the entire length of the first current path and the entire length of the second current path are the same, a combined resistance of the first current path as whole is larger than a combined resistance of the second current path as a whole, and the current flowing in the first current path becomes smaller than the current flowing in the second current path. When the current flowing in the first current path and the current flowing in the second current path are different in this way, and Joule heat depending on a position of the heat flow path is different. Therefore, the heat flow path as a whole may not be able to be appropriately heated. For example, the Joule heat generated at the one end portion 208a and at the other end portion 208b of the first heat collection elements 208 may differ. If separate power supplies are provided for the first current path and the second current path, the current flowing in the first current path and the current flowing in the second current path can be made the same. However, in this case, the cost increases.

[patent document 2] US 2014/0238523 A1

Discloses a heating device for heating the heat flow path of a solar heat power generation system.

The present invention has been made in view of such circumstances, and an object of the present invention is to provide a solar heat power generation system comprising at least one heating device capable of appropriately heating a heat flow path in the solar heat power generation system.

This object or problem is solved by the solar heat power generation system of claim 1, in particular by the system of the dependent claims. To solve the above problem, a solar heat power generation system according to an embodiment of the present invention comprises at least one heating device for heating a heat flow path through which a heat transfer fluid that receives solar heat flows. The solar heat power generation system comprises at least one heat flow path which includes a first heat collection elements and a second heat collection elements that receive concentrated sunlight, and a connection pipe that connects one end portion of the first heat collection elements and one portion of the second heat collection elements. The solar heat power generation system comprises at least one heating device which includes a connecting wire that electrically connects the other end portion of the first heat collection elements and the other end portion of the second heat collection elements, a power supply for causing a current to flow in the heat flow path, a first power supply wire that connects one pole of the power supply and a middle of the first heat collection elements, a second power supply wire that connects the other pole of the power supply and a middle of the second heat collection elements, and a bypass wire electrically connected in parallel to the connection pipe, wherein a resistance value of the bypass wire is set to be larger than a resistance value of the connecting wire and smaller than a resistance value of the connection pipe.

In the heating device configured as described above, the first power supply wire, a portion from the middle to the one end portion of the first heat collection elements, the connection pipe, the bypass wire, a portion from the one end portion to the middle of the second heat collection elements, and the second power supply wire form a first current path. Further, the first power supply wire, a portion from the middle to the other end portion of the first heat collection elements, the connecting wire, a portion from the other end portion to the middle of the second heat collection elements, and the second power supply wire form a second current path. According to the heating device, a bypass wire is provided in parallel to the connection pipe, whereby combined resistance of the first current path as a whole can be decreased to approach a combined resistance of the second current path as a whole. As a result, a difference between a current flowing in the first current path and a current flowing in the second current path becomes small, and a difference in Joule heat depending on a position of the heat flow path becomes small. Therefore, the heat flow path can be appropriately heated.

At least one heat flow path may be formed by connecting the first heat collection elements, the connection pipe, and the second heat collection elements in a U-shaped manner. The first heat collection elements and the second heat collection elements may be parallel to each other. The first power supply wire may be connected to a center point of the first heat collection elements from one pole and the second power supply wire may be connected to a center point of the second heat collection elements from the other pole.

A difference between a first combined resistance value and a second combined resistance value may fall within 10% of the second combined resistance value, the first combined resistance value being of the first power supply wire, a portion from the middle to the one end portion of the first heat collection elements, the connection pipe, the bypass wire, a portion from the one end portion to the middle of the second heat collection elements, and the second power supply wire, and the second combined resistance value being of the first power supply wire, a portion from the middle to the other end portion of the first heat collection elements, the connecting wire, a portion from the other end portion to the middle of the second heat collection elements, and the second power supply wire.

Connection position variable means for changing a connection position between the connection pipe and the bypass wire may be further included.

Note that arbitrary combinations of the above configuration elements and those obtained by converting the expressions of the present invention among devices, methods, systems, and the like are also effective as aspects of the present invention.

According to the present invention, a solar heat power generation system comprising at least one heating device capable of appropriately heating a heat flow path of the solar heat power generation system can be provided.
Fig. 1 is a diagram for describing an example of a heating device for heating a heat flow path.
Fig. 2 is a diagram for describing a solar heat power generation system according to an embodiment of the present invention.
Fig. 3 is a diagram for describing a solar heat collecting device according to an embodiment of the present invention.
Fig. 4 is a diagram for describing a heating device according to an embodiment of the present invention.
Fig. 5 is a diagram for describing a modification of a heating device according to an embodiment of the present invention.

Hereinafter, the same or equivalent configuration elements and members illustrated in the drawings are denoted with the same reference numerals, and redundant description is omitted as appropriate. Further, the dimensions of the members in the drawings are appropriately enlarged or reduced for facilitating understanding. Illustration of a part of the members less important for describing an embodiment in the drawings is omitted.

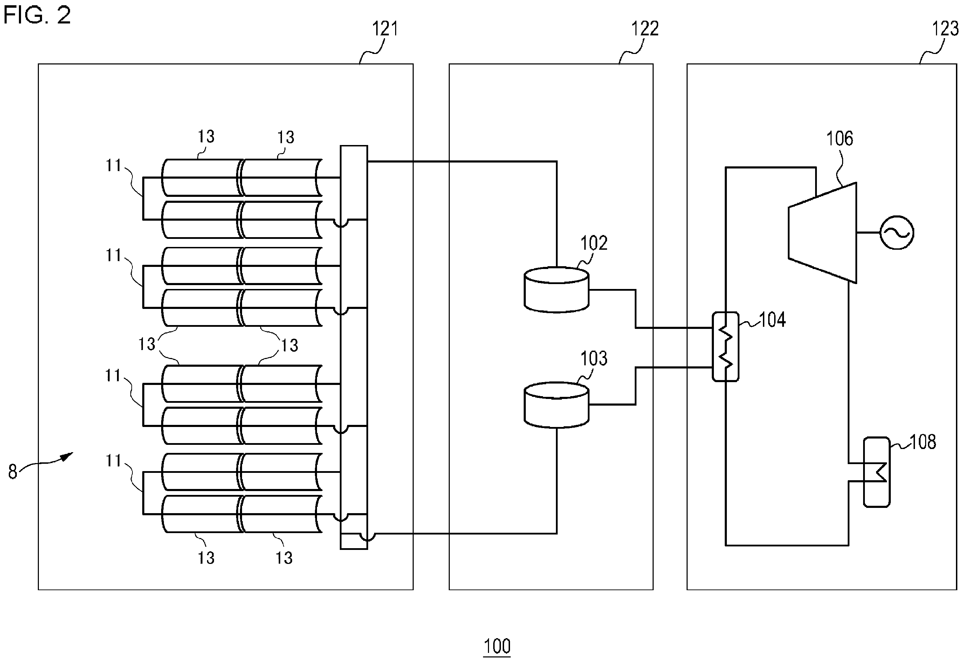

Fig. 2 is a diagram for describing a solar heat power generation system 100 according to an embodiment of the present invention. The solar heat power generation system 100 includes three areas of a light condensing area 121, a heat storage area 122, and a power generation area 123.

The light condensing area 121 mainly includes a solar heat collecting device 8. The solar heat collecting device 8 includes a heat flow path 11 in which a heat transfer fluid flows and a plurality of reflectors 13 that condenses sunlight to the heat flow path and heats the heat transfer fluid. The heated heat transfer fluid is sent to the heat storage area 122.

The heat storage area 122 includes a hot tank 102 and a cold tank 103. By storing the heat of the heated heat transfer fluid in the hot tank 102, power generation can be performed when necessary. For example, the power generation can be performed at night and in bad weather during the day.

The power generation area 123 includes a steam generator 104, a steam turbine generator 106, and a condenser 108. The steam generator 104 generates steam by heat exchange between cooling water and the heated heat transfer fluid, and the steam turbine generator 106 rotates a turbine by the steam. Power is generated by the rotation. The condenser 108 returns the steam to the cooling water.

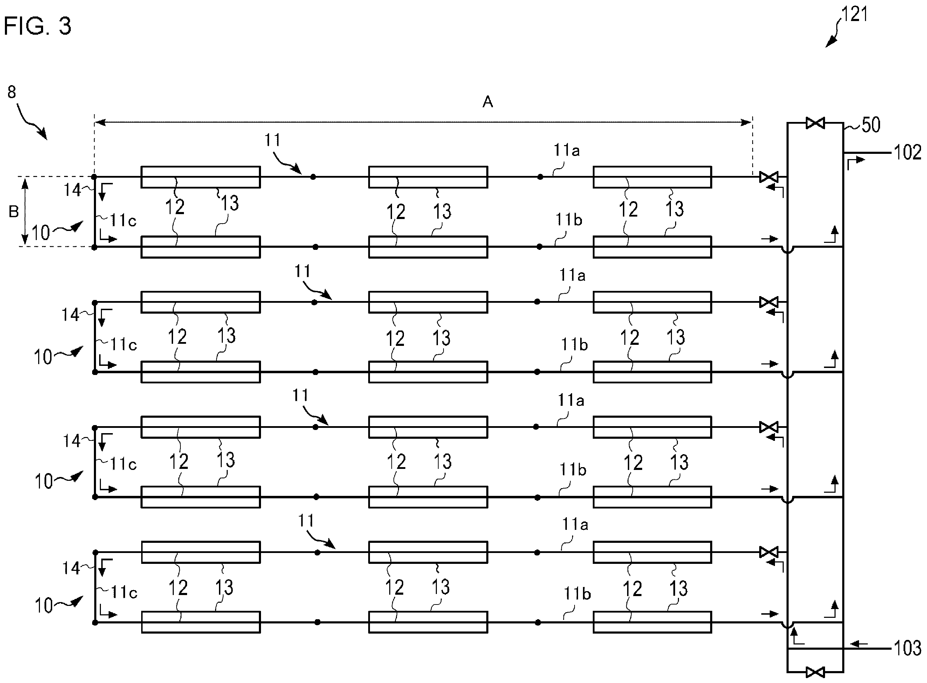

Fig. 3 is a diagram for describing the solar heat collecting device 8 according to an embodiment of the present invention. As illustrated in Fig. 3, the solar heat collecting device 8 includes a plurality of (four in Fig. 2) light condensing units 10 and a connection flow path 50. Each of the light condensing units 10 includes the heat flow path 11 and the plurality of reflectors 13. The heat flow path 11 is supported by a plurality of support columns (not illustrated) arranged along the heat flow path 11. Further, the reflector 13 is rotatably supported by the support column.

The reflector 13 condenses the sunlight to the heat flow path 11 to heat the heat transfer fluid flowing in the heat flow path 11. A rotary device (not illustrated) is connected to the reflector 13. The rotary device rotates the reflector 13 according to the position of the sun, for example. As a result, the heat transfer fluid is intermittently heated.

Each heat flow path 11 is formed in a U-shaped manner and is composed of long straight portions 11a and 11b parallel to each other and a short straight portion 11c connecting one end portions of the long straight portions 11a and 11b. Each of the long straight portions 11a and 11b is composed of a plurality of heat collection elements 12 arranged in a linear manner. Flexible hoses (not illustrated) are connected to respective end portions of two adjacent heat collection elements 12. These two flexible hoses are connected by pipes (not illustrated). The short straight portion 11c is composed of a connection pipe 14. A length A of the long straight portions 11a and 11b may be about 500 to 600 m, and the length of each of the heat collection elements 12 may be about 100 to 200 m. The long straight portion 11a may be formed of 2 to 3 heat collection elements 12. Further, a length B of the short straight portion 11c may be 20 to 30 m.

The heat collection elements 12 is a linearly extending tube and is supported having its center positioned at a focal point of a parabolic cylindrical reflecting surface of the reflector 13. The connection pipe 14 causes the heat collection elements 12 positioned at ends of the long straight portions 11a and 11b to communicate with each other. The heat collection elements 12 and the connection pipe 14 may be formed of different metal materials or may be formed of the same metal material. Further, the heat collection elements 12 may be covered with a vacuum glass tube for heat insulation.

In the heat flow path 11, molten salt as a heat transfer fluid flows. The molten salt receives solar heat. Molten salt has a higher boiling than synthetic oil conventionally used in solar heat collecting devices, and thus can be warmed to a higher temperature. Therefore, the power generation efficiency of the solar heat power generation system 100 is improved. Meanwhile, the molten salt solidifies at about 250°C. Since the molten salt does not basically solidify because the molten salt is heated by solar heat during operation. However, the heat flow path 11 draws heat from the molten salt and the molten salt may solidify if the temperature of the heat flow path 11 is relatively low when the molten salt is poured into the heat flow path 11 after start-up or maintenance. Therefore, it is necessary to warm the heat flow path 11 to a predetermined temperature or higher before pouring the molten salt into the heat flow path 11.

As a technique of warming the heat flow path 11, it is conceivable to train a heating wire over the heat flow path 11 and to cause a current to flow in the heating wire to warm the heat flow path 11. However, when the heat collection elements 12 of the heat flow path 11 is covered with a vacuum glass tube for heat insulation, the heating wire cannot be trained. Therefore, the light condensing unit 10 of the present embodiment includes a heating device (to be described below) that causes a current to flow in the heat flow path 11 itself and warms the heat flow path 11 by Joule head generated when the current flows.

The connection flow path 50 is an annular flow path and is connected to each heat flow path 11. Further, the connection flow path 50 is also connected with the hot tank 102 and the cold tank 103 of the heat storage area 122. Therefore, each heat flow path 11, the hot tank 102 and the cold tank 103 are connected via the connection flow path 50. The heat transfer fluid flows from the cold tank 103 into the connection flow path 50. The heat transfer fluid flowing in the connection flow path 50 flows into the long straight portion 11a of each heat flow path 11. The heat transfer fluid passing through the heat collection elements 12 of the long straight portion 11a and heated flows into the long straight portion 11b through the connection pipe 14. The heat transfer fluid passing through the heat collection elements 12 of the long straight portion 11b and heated returns to the connection flow path 50 and flows into the hot tank 102.

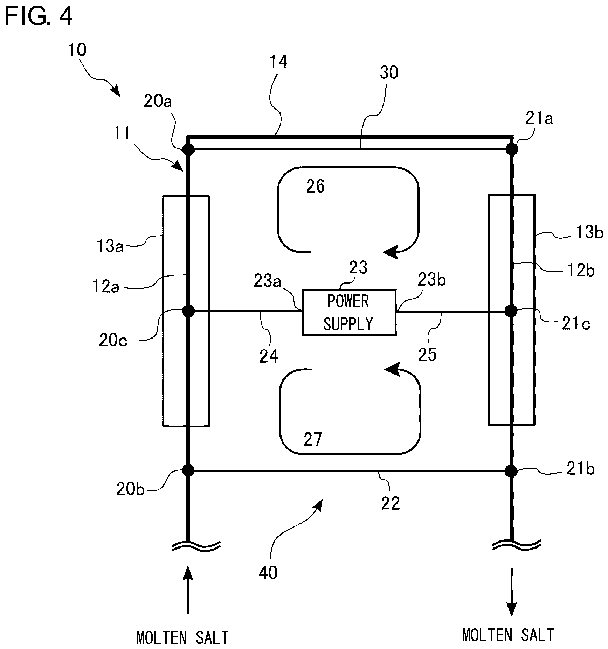

Fig. 4 is a diagram for describing a heating device 40 according to an embodiment of the present invention. Fig. 4 illustrates an end portion of the U-shaped heat flow path 11. The heat flow path 11 includes a first heat collection elements 12a that receives sunlight concentrated by a first reflector 13a, a second heat collection elements 12b that receive concentrated sunlight concentrated by a second reflector 13b, and the connection pipe 14 that connects one end portion 20a of the first heat collection elements 12a and one end portion 21a of the second heat collection elements 12b. As illustrated in Fig. 4, the first heat collection elements 12a, the connection pipe 14, and the second heat collection elements 12b are connected in a U-shaped manner. The first heat collection elements 12a and the second heat collection elements 12b have the same length and are arranged in parallel to each other.

The heating device 40 heats the first heat collection elements 12a, the connection pipe 14 and the second heat collection elements 12b in which the molten salt flows. The heating device 40 includes a connecting wire 22 that electrically connects the other end portion 20b of the first heat collection elements 12a and the other end portion 21b of the second heat collection elements 12b, a power supply 23 for causing a current to flow in the heat flow path 11, a first power supply wire 24 that connects one pole 23a of the power supply 23 and a center point 20c of the first heat collection elements 12a, and a second power supply wire 25 that connects the other pole 23b of the power supply 23 and a center point 21c of the second heat collection elements 12b. The connection pipe 14 and the connecting wire 22 have the same length and are arranged in parallel to each other.

The heating device 40 according to the present embodiment further includes a bypass wire 30 electrically connected in parallel to the connection pipe 14. One end portion of the bypass wire 30 is connected to the one end portion 20a of the first heat collection elements 12a and the other end portion of the bypass wire 30 is connected to the one end portion 21a of the second heat collection elements 12b. In a case where the bypass wire 30 is provided in parallel to the connection pipe 14, a resistance value between the one end portion 20a of the first heat collection elements 12a and the one end portion 21a of the second heat collection elements 12b becomes a combined resistance value of the connection pipe 14 and the bypass wire 30.

In the configuration illustrated in Fig. 4, the first power supply wire 24, a portion from the center point 20c to the one end portion 20a of the first heat collection elements 12a, the connection pipe 14, the bypass wire 30, a portion from the one end portion 21a to the center point 21c of the second heat collection elements 12b, and the second power supply wire 25 form a first current path 26 in which a current from the power supply 23 flows. Further, the first power supply wire 24, a portion from the center point 20c to the other end portion 20b of the first heat collection elements 12a, the connecting wire 22, a portion from the other end portion 21b to the center point 21c of the second heat collection elements 12b, and the second power supply wire 25 form a second current path 27 in which the current from the power supply 23 flows. The first current path 26 and the second current path 27 configure a closed loop circuit. When a current is supplied from the power supply 23 to the first current path 26 and the second current path 27, Joule heat is generated by electric resistance of the first heat collection elements 12a, the second heat collection elements 12b, and the connection pipe 14. As a result, the first heat collection elements 12a, the second heat collection elements 12b, and the connection pipe 14 can be warmed.

In the present embodiment, the first power supply wire 24 is connected to the center point 20c of the first heat collection elements 12a, and the second power supply wire 25 is connected to the center point 21c of the second heat collection elements 12b. A combined resistance of the first power supply wire 24, the portion from the center point 20c to the one end portion 20a of the first heat collection elements 12a, the portion from the one end portion 21a to the center point 21c of the second heat collection elements 12b, and the second power supply wire 25 in the first current path 26, and a combined resistance of the first power supply wire 24, the portion from the center point 20c to the other end portion 20b of the first heat collection elements 12a, the portion from the other end portion 21b to the center point 21c of the second heat collection elements 12b, and the second power supply wire 25 in the second current path 27 are the same. Therefore, a difference between the combined resistance value of the first current path 26 as a whole (hereinafter, the combined resistance is referred to as "first combined resistance value") and the combined resistance value of the second current path 27 as a whole (hereinafter, the combined resistance is referred to as "second combined resistance value") depends on the combined resistance value of the connection pipe 14 and the bypass wire 30 and the resistance value of the connecting wire 22.

In the heating device 40 according to the present embodiment, the resistance value of the bypass wire 30 is set such that the combined resistance value of the bypass wire 30 and the connection pipe 14 approximates the resistance value of the connecting wire 22. The resistance value of the bypass wire 30 can be changed by changing the material, thickness, length, or the like of the bypass wire 30. For example, as the bypass wire 30 is made thicker, the resistance value of the bypass wire 30 becomes smaller. Further, as the length of the bypass wire 30 is made longer, the resistance value of the bypass wire 30 becomes larger.

In the heating device 40 according to the present embodiment, the bypass wire 30 is provided in parallel to the connection pipe 14, whereby the first combined resistance value of the first current path 26 can be decreased (as compared with a case where no bypass wire 30 is provided) to approach the second combined resistance value of the second current path 27. As a result, a difference between a current flowing in the first current path 26 and a current flowing in the second current path 27 becomes small, and a difference in Joule heat depending on a position of the heat flow path becomes small. Therefore, the heat flow path 11 as a whole can be appropriately heated. For example, when the current flowing in the first current path 26 and the current flowing in the second current path 27 approximate each other, the Joule heat generated in the one end portion 20a and the other end portion 20b of the first heat collection elements 12a also approximate each other.

When the resistance value of the bypass wire 30 is set to a very low resistance value similar to that of the connecting wire 22, most of the current flowing in the first current path 26 flows in the bypass wire 30, and the current flowing in the connection pipe 14 is decreased. Therefore, Joule heat generated in the connection pipe 14 is decreased, and the connection pipe 14 may not be able to be effectively heated. Further, when the resistance value of the bypass wire 30 is set to be larger than the resistance value of the connection pipe 14, it is difficult to have the combined resistance of the first current path 26 approach the combined resistance of the second current path 27. Therefore, according to the invention, the resistance value of the bypass wire 30 is set to be larger than the resistance value of the connecting wire 22 and smaller than the resistance value of the connection pipe 14. Thus, the connection pipe 14 can be effectively heated while the combined resistance of the first current path 26 approaches the combined resistance of the second current path 27.

In the above embodiment, the first power supply wire 24 is connected to the center point 20c of the first heat collection elements 12a, and the second power supply wire 25 is connected to the center point 21c of the second heat collection elements 12b. However, the connection points of the first power supply wire 24 and the second power supply wire 25 are not limited to the center points of the first heat collection elements 12a and the second heat collection elements 12b as long as the connection points are some middle points of the first heat collection elements 12a and the second heat collection elements 12b (that is, any position between both end portions of the heat connection elements). In this case, the resistance value of the bypass wire 30 is set such that the first combined resistance value approaches the second combined resistance value. The difference between the first combined resistance value and the second combined resistance value is favorably within 10% of the second combined resistance value, for example.

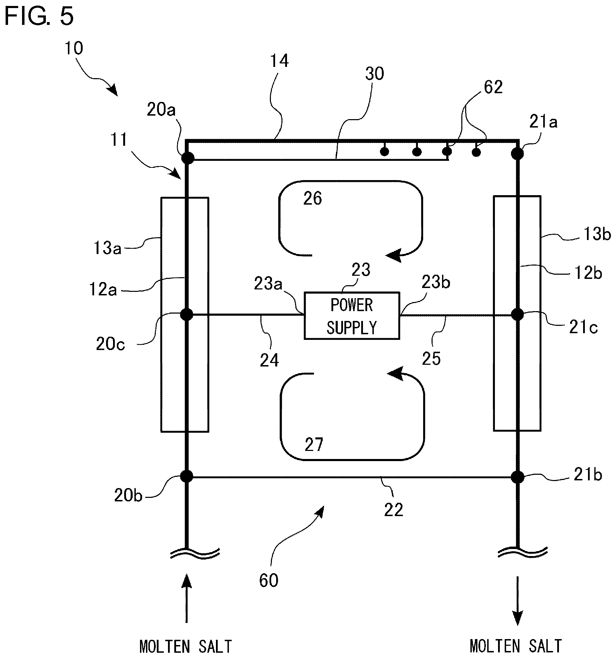

Fig. 5 is a diagram for describing a modification of a heating device according to an embodiment of the present invention. A heating device 60 according to the present modification further includes a connection position variable portion 62 for changing a connection position between a connection pipe 14 and a bypass wire 30. The connection position variable portion 62 is a conductive member provided on a surface of the connection pipe 14 and has a mounting portion for mounting the bypass wire 30. As illustrated in Fig. 5, a plurality of the connection position variable portions 62 is provided on the surface of the connection pipe 14 at predetermined intervals.

One end portion of the bypass wire 30 is connected to one end portion 20a of a first heat collection elements 12a. Further, the other end portion of the bypass wire 30 is connected to the mounting portion of the connection position variable portion 62. In the present modification, a resistance value between the one end portion 20a of the first heat collection elements 12a and the one end portion 21a of the second heat collection elements 12b becomes a sum of a combined resistance value of the bypass wire 30 and a part of the connection pipe 14 connected in parallel, and a resistance value of the remaining portion of the connection pipe 14. In the present modification, by changing the connection position variable portion 62 that connects the other end portion of the bypass wire 30, the resistance value between the one end portion 20a of the first heat collection elements 12a and the one end portion 21a of the second heat collection elements 12b can be changed.

According to the heating device 60 of the present modification, an operator selects the connection point of the bypass wire 30 from among the plurality of connection position variable portions 62 at an installation location of a solar heat power generation system, thereby to change a first combined resistance value of the first current path 26. Therefore, the first combined resistance value can approach a second combined resistance value, and thus a heat flow path 11 can be more appropriately heated.

The present invention has been described on the basis of the embodiments. It is to be understood by those skilled in the art that the embodiments are merely examples, various modifications can be made to the combination of configuration elements and processing processes of the embodiments and that such modifications fall also within the scope of the present invention.

## Claims

1. A solar heat power generation system (100), comprising
at least one heat flow path (11), comprising
at least one heating device (40) for heating the heat flow path (11) in which a heat transfer fluid that receives solar heat flows,
the heat flow path (11) including first heat collection elements (12a) and second heat collection elements (12b) that receive concentrated sunlight, and a connection pipe (14) that connects one end portion (20a) of the first heat collection elements (12a) and one end portion (21a) of the second heat collection elements (12b),
the at least one heating device (40) comprising:
a connecting wire (22) that electrically connects the other end portion (20b) of the first heat collection elements (12a) and the other end portion (21b) of the second heat collection elements (12b);
a power supply (23) for causing a current to flow in the heat flow path (11);
a first power supply wire (24) that connects one pole (23a) of the power supply (23) and a middle (20c) of the first heat collection elements (12a);
a second power supply wire (25) that connects the other pole (23b) of the power supply (23) and a middle (21c) of the second heat collection elements (12b); and
a bypass wire (30) electrically connected in parallel to the connection pipe (14);
**characterised in that** a resistance value of the bypass wire (30) is set to be larger than a resistance value of the connecting wire (22) and smaller than a resistance value of the connection pipe (14).

2. The solar heat power generation system (100) according to claim 1, wherein
the heat flow path (11) is formed by connecting the first heat collection elements (12a), the connection pipe (14), and the second heat collection elements (12b) in a U-shaped manner,
the first heat collection elements (12a) and the second heat collection elements (12b) are parallel to each other,
the first power supply wire (24) connects the one pole (23a) and a center point (20c) of the first heat collection elements (12a), and
the second power supply wire (25) connects the other pole (23b) and a center point (21c) of the second heat collection elements (12b).

3. The solar heat power generation system (100) according to claim 1 or 2, wherein a difference between a first combined resistance value and a second combined resistance value falls within 10% of the second combined resistance value, the first combined resistance value being of the first power supply wire (24), a portion from the middle (20c) to the one end portion (20a) of the first heat collection elements (12a), the connection pipe (14), the bypass wire (30), a portion from the one end portion (21a) to the middle (21c) of the second heat collection elements (12b), and the second power supply wire (25), and the second combined resistance value being of the first power supply wire (24), a portion from the middle (20c) to the other end portion (20b) of the first heat collection elements (12a), the connecting wire (22), a portion from the other end portion (21b) to the middle (21c) of the second heat collection elements (12b) and the second power supply wire (25).

4. The solar heat power generation system (100) according to any one of claims 1 to 3, further comprising:
connection position variable means (62) that changes a connection position between the connection pipe (14) and the bypass wire (30).

## Patentansprüche

1. System (100) zum Erzeugen von Sonnenwärmeenergie, umfassend mindestens einen Wärmeflusspfad (11), umfassend
mindestens eine Heizvorrichtung (40) zum Erhitzen des Wärmeflusspfades (11), auf dem ein Wärmeübertragungsfluid strömt, das Sonnenwärme empfängt,
wobei der Wärmeflusspfad (11) erste Wärmesammelelemente (12a) und zweite Wärmesammelelemente (12b), die konzentriertes Sonnenlicht empfangen, und ein Verbindungsrohr (14), das einen Endabschnitt (20a) der ersten Wärmesammelelemente (12a) und einen Endabschnitt (21a) der zweiten Wärmesammelelemente (12b) verbindet, umfasst,
wobei die mindestens eine Heizvorrichtung (40) umfasst:
einen Verbindungsdraht (22), der den anderen Endabschnitt (20b) der ersten Wärmesammelelemente (12a) und den anderen Endabschnitt (21b) der zweiten Wärmesammelelemente (12b) elektrisch verbindet;
eine Energieversorgung (23), um zu bewirken, dass auf dem Wärmeflusspfad (11) Strom fließt;
einen ersten Energieversorgungsdraht (24), der einen Pol (23a) der Energieversorgung (23) und eine Mitte (20c) der ersten Wärmesammelelemente (12a) verbindet;
einen zweiten Energieversorgungsdraht (25), der den anderen Pol (23b) der Energieversorgung (23) und eine Mitte (21c) der zweiten Wärmesammelelemente (12b) verbindet; und
einen Nebenschlussdraht (30), der mit dem Verbindungsrohr (14) elektrisch parallel geschaltet ist;
**dadurch gekennzeichnet, dass** ein Widerstandswert des Nebenschlussdrahtes (30) eingestellt ist, um größer als ein Widerstandswert des Verbindungsdrahtes (22) und kleiner als ein Widerstandswert des Verbindungsrohrs (14) zu sein.

2. System (100) zum Erzeugen von Sonnenwärmeenergie nach Anspruch 1, wobei
der Wärmeflusspfad (11) gebildet wird, indem die ersten Wärmesammelelemente (12a), das Verbindungsrohr (14) und die zweiten Wärmesammelelemente (12a) U-förmig verbunden werden,
die ersten Wärmesammelelemente (12a) und die zweiten Wärmesammelelemente (12b) zueinander parallel sind,
der erste Energieversorgungsdraht (24) den einen Pol (23a) und einen Mittelpunkt (20c) der ersten Wärmesammelelemente (12a) verbindet, und
der zweite Energieversorgungsdraht (25) den anderen Pol (23b) und einen Mittelpunkt (21c) der zweiten Wärmesammelelemente (12b) verbindet.

3. System (100) zum Erzeugen von Sonnenwärmeenergie nach Anspruch 1 oder 2, wobei eine Differenz zwischen einem ersten kombinierten Widerstandswert und einem zweiten kombinierten Widerstandswert innerhalb von 10 % des zweiten kombinierten Widerstandswertes liegt, wobei der erste kombinierte Widerstandswert von dem ersten Energieversorgungsdraht (24), einem Abschnitt von der Mitte (20c) bis zu einem Endabschnitt (20a) der ersten Wärmesammelelemente (12a), dem Verbindungsrohr (14), dem Nebenschlussdraht (30), einem Abschnitt von dem einen Endabschnitt (21a) bis zur Mitte (21c) der zweiten Wärmesammelelemente (12b) und dem zweiten Energieversorgungsdraht (25) ist, und der zweite kombinierte Widerstandswert von dem ersten Energieversorgungsdraht (24), einem Abschnitt von der Mitte (20c) bis zu dem anderen Endabschnitt (20b) der ersten Wärmesammelelemente (12a), dem Verbindungsdraht (22), einem Abschnitt von dem anderen Endabschnitt (21b) bis zur Mitte (21c) der zweiten Wärmesammelelemente (12b) und dem zweiten Energieversorgungsdraht (25) ist.

4. System (100) zum Erzeugen von Sonnenwärmeenergie nach einem der Ansprüche 1 bis 3, ferner umfassend:
Mittel (62) mit variabler Verbindungsposition, die eine Verbindungsposition zwischen dem Verbindungsrohr (14) und dem Nebenschlussdraht (30) ändern.

## Revendications

1. Système de génération d'énergie solaire (100), comprenant au moins un trajet d'écoulement de chaleur (11), comprenant au moins un dispositif de chauffage (40) pour chauffer le trajet d'écoulement de chaleur (11) dans lequel un fluide de transfert de chaleur qui reçoit de la chaleur s'écoule,
le trajet d'écoulement de chaleur (11) comprenant des premiers éléments de collecte de chaleur (12a) et des seconds éléments de collecte de chaleur (12b) qui reçoivent de la lumière du soleil concentrée, et un tuyau de raccordement (14) qui relie une première partie d'extrémité (20a) des premiers éléments de collecte de chaleur (12a) et une première partie d'extrémité (21a) des seconds éléments de collecte de chaleur (12b),
l'au moins un dispositif de chauffage (40) comprenant:
un fil de raccordement (22) qui relie électriquement l'autre partie d'extrémité (20b) des premiers éléments de collecte de chaleur (12a) et l'autre partie d'extrémité (21b) des seconds éléments de collecte de chaleur (12b);
une alimentation électrique (23) pour amener un courant à circuler dans le trajet d'écoulement de chaleur (11);
un premier fil d'alimentation électrique (24) qui relie un premier pôle (23a) de l'alimentation électrique (23) et un milieu (20c) des premiers éléments de collecte de chaleur (12a);
un second fil d'alimentation électrique (25) qui relie l'autre pôle (23b) de l'alimentation électrique (23) et un milieu (21c) des seconds éléments de collecte de chaleur (12b); et
un fil de dérivation (30) monté électriquement en parallèle au tuyau de raccordement (14);
**caractérisé par le fait qu'**une valeur de résistance du fil de dérivation (30) est définie pour être supérieure à une valeur de résistance du fil de raccordement (22) et inférieure à une valeur de résistance du tuyau de raccordement (14).

2. Système de génération d'énergie solaire (100) selon la revendication 1, dans Alequel
le trajet d'écoulement de chaleur (11) est formé par raccordement des premiers éléments de collecte de chaleur (12a), du tuyau de raccordement (14) et des seconds éléments de collecte de chaleur (12b) en une forme de U,
les premiers éléments de collecte de chaleur (12a) et les seconds éléments de collecte de chaleur (12b) sont parallèles les uns aux autres,
le premier fil d'alimentation électrique (24) relie le premier pôle (23a) et un point central (20c) des premiers éléments de collecte de chaleur (12a), et
le second fil d'alimentation électrique (25) relie l'autre pôle (23b) et un point central (21c) des seconds éléments de collecte de chaleur (12b).

3. Système de génération d'énergie solaire (100) selon la revendication 1 ou 2, dans lequel une différence entre une première valeur de résistance combinée et une seconde valeur de résistance combinée se situe dans les limites de 10 % de la seconde valeur de résistance combinée, la première valeur de résistance combinée étant celle du premier fil d'alimentation électrique (24), d'une partie allant du milieu (20c) à la première partie d'extrémité (20a) des premiers éléments de collecte de chaleur (12a), du tuyau de raccordement (14), du fil de dérivation (30), d'une partie allant de la première partie d'extrémité (21a) au milieu (21c) des seconds éléments de collecte de chaleur (12b), et du second fil d'alimentation électrique (25), et la seconde valeur de résistance combinée étant celle du premier fil d'alimentation électrique (24), d'une partie allant du milieu (20c) à l'autre partie d'extrémité (20b) des premiers éléments de collecte de chaleur (12a), du fil de raccordement (22), d'une partie allant de l'autre partie d'extrémité (21b) au milieu (21c) des seconds éléments de collecte de chaleur (12b), et du second fil d'alimentation électrique (25).

4. Système de génération d'énergie solaire (100) selon l'une quelconque des revendications 1 à 3, comprenant en outre:
un moyen de variation de position de raccordement (62) qui change une position de raccordement entre le tuyau de raccordement (14) et le fil de dérivation (30).
